# EUROPÄISCHE PATENTSCHRIFT

(11) **EP 0 905 489 B1**
(45) Veröffentlichungstag und Bekanntmachung des Hinweises auf die Patenterteilung: **10.07.2002**
(21) Anmeldenummer: 98118205.8
(22) Anmeldetag: 25.09.1998
(51) Int. Cl.: G01F 23/296

(54) **Verfahren und Vorrichtung zur Bestimmung des Inhalts einer Gasflasche**
Method and apparatus for determining the contents of a gas bottle
Procédé et dispositif pour la détermination du contenu d'une bouteille de gaz

(30) Priorität: 26.09.1997 DE 19742683
(43) Veröffentlichungstag der Anmeldung: 31.03.1999
(73) Patentinhaber: Reich KG, Regel- und Sicherheitstechnik, 35713 Eschenburg-Wissenbach (DE)
(72) Erfinder: Bender, Helmuth, 35713 Eschenburg-Wissenbach (DE); Roelvink, Hans, 3011 VB Rotterdam (NL); Veltman, André, 4101 BW Culemborg (NL)
(74) Vertreter: Hofstetter, Alfons J., Dr.rer.nat.

(56) Entgegenhaltungen:
- EP-A- 0 119 790
- EP-A- 0 831 308
- WO-A-82/01584
- GB-A- 2 146 770
- GB-A- 2 298 279
- US-A- 5 261 274

## Beschreibung

Die vorliegende Erfindung bezieht sich auf ein Verfahren zur Bestimmung des Inhalts einer Gasflasche, insbesondere von Gasflaschen, wie sie im Campingbereich, in Booten, Wohnwagen, Wohnmobilen, in Ferienhäusern, aber auch im Haushalt oder vom Handwerker als transportable Energiequelle zum Heizen mit offener Flamme genutzt werden. Die Erfindung bezieht sich weiterhin auf eine Vorrichtung zur Bestimmung des Inhalts einer Gasflasche.

Der Verwender kann bislang den Inhalt oder Restinhalt dieser Gasflaschen aus druckfestem Metall zum Beispiel durch Abwiegen mittels einer Waage bestimmen (vgl. z. B. DE 195 32 378). Das ist jedoch nicht immer möglich. Hierzu muß auch das Leergewicht der Flasche genau bekannt sein, und der Füllgrad muß aus einer Gewichtsdifferenz rechnerisch ermittelt werden. Dieser ganze Vorgang ist arbeits- und zeitaufwendig sowie ungenau.

Es ist weiterhin bekannt, temperatursensible Streifen am Mantel der Gasflaschen oder Temperatursensoren im Inneren von Gasbehältern (vgl. DE 296 06 594) zu befestigen. Aufgrund der Temperaturdifferenz zwischen dem mit Flüssiggas angefüllten Bereich der Gasflasche und dem bereits entleerten kann eine ungefähre Abschätzung des Füllstandes getroffen werden. Auch diese Lösung ist jedoch nur sehr ungenau und unter anderem auch durch Außentemperaturschwankungen beeinflußbar.

Weitere verfahren und Vorrichtungen sind aus US 5 261 274 und GB 2 298 279 bekannt.

Es besteht daher die Aufgabe, ein Verfahren der eingangs genannten Art bereitzustellen, das eine einfache, zuverlässige und von jedermann leicht anwendbare Art der Inhaltsbestimmung ermöglicht und kostengünstig zu realisieren ist.

Diese Aufgabe wird erfindungsgemäß durch die Schritte des Anspruchs 1 gelöst. Zunächst wird eine Gasflasche durch Anlegen eines Signals an einen Lautsprecher, der an der Gasflasche angeordnet ist, angeregt. Die Phase des zur Anregung verwendeten Signals wird mit dem vom Mikrophon gelieferten Signal verglichen, wobei die Frequenz des an den Lautsprecher angelegten Signals kontinuierlich geändert wird, bis eine Resonanzfrequenz festgestellt wird. Unter Verwendung der festgestellten Resonanzfrequenz wird anschließend der Füllstand der Gasflasche bestimmt.

Zur Vermeidung von akustischen Rückkopplungen wird wie folgt vorgegangen: Der spannungsgesteuerte Oszillator erzeugt ein Wechselsignal, das zum einen zur Ansteuerung des Lautsprechers, zum anderen zur Ansteuerung des Phasendetektors verwendet wird. Eine Phasendetektion und ein Phasenvergleich zwischen dem vom spannungsgesteuerten Oszillator an den Phasendetektor gelieferten Signal und dem vom Mikrophon gelieferten Signal wird nur zu Zeiten durchgeführt, zu denen der Lautsprecher kein Signal abgibt.

Der Erfindung liegt weiterhin die Aufgabe zugrunde, eine Vorrichtung zur Bestimmung des Inhalts einer Gasflasche bereitzustellen, die eine einfache, zuverlässige und von jedermann leicht anwendbare Art der Inhaltsbestimmung ermöglicht und kostengünstig zu realisieren ist.

Dies wird erfindungsgemäß mittels des Merkmale des Anspruch 17 gelöst.

In vorteilhafter Weise wird das an den Lautsprecher angelegte Signal von einem spannungsgesteuerten Oszillator erzeugt, der von einem Mikroprozessor gesteuert wird.

Die Resonanzfrequenz wird durch einen Phasenvergleich des zur Anregung der Gasflasche über den Lautsprecher dienenden Signals mit der Phase des vom Mikrophon gelieferten Signals festgestellt.

Die kontinuierliche Änderung der Frequenz des den Lautsprecher ansteuernden Signals erfolgt vorzugsweise durch Sweepen der Frequenz von einem Maximalwert zu einem Minimalwert oder von einem Minimalwert zu einem Maximalwert.

Nach Feststellen einer Resonanzfrequenz wird eine Phase-Locked-Loop-Schaltung (PLL-Schaltung) aktiviert, die ein Innehalten der kontinuierlichen Änderung der Frequenz des den Lautsprecher ansteuernden Signals bewirkt, wobei die zu dem Zeitpunkt eingestellte Frequenz, d.h. die Resonanzfrequenz, beibehalten wird.

Es kann jedoch auch vorgesehen werden, vor der Aktivierung der Phase-Locked-Loop-Schaltung die exakte Resonanzfrequenz durch Steuerung des spannungsgesteuerten Oszillators mit Hilfe eines PI- (Proportional und Integral) Verstärkers zu ermitteln.

Das vom.Mikrophon gelieferte Signal wird vorzugsweise bandpaßgefiltert, um harmonische Frequenzen sowie störendes Rauschen auszufiltern. Vorzugsweise wird das vom Mikrophon gelieferte Signal mittels einer Automatic-Gain-Control- (AGC) Schaltung auf einen konstanten Pegel geregelt.

Die Frequenz durchläuft beim kontinuierlichem Ändern einen Frequenzbereich zwischen 50 Hz und 5 kHz, vorzugsweise ca. 250 Hz und 2,5 kHz.

Zusätzlich kann die Temperatur der Gasflasche bestimmt werden, wobei dann bei der Umrechnung der Resonanzfrequenz in den Füllstand diese Temperatur berücksichtigt werden kann. Die Umrechnung der ermittelten Resonanzfrequenz in den Füllstand der Gasflasche kann anhand einer im Mikroprozessor abgelegten Eichtabelle erfolgen, kann aber auch über einen formelmäßig ausgedrückten Zusammenhang zwischen Füllstand und Resonanzfrequenz mathematisch ermittelt werden.

Weiterhin wird das den Lautsprecher ansteuernde Signal auf konstante Amplitude geregelt.

Schließlich wird das Ergebnis der Umrechnung automatisch auf einer Anzeige angezeigt.

Weitere vorteilhafte Ausgestaltungen sind in den Unteransprüchen beschrieben.

Weitere Einzelheiten, Merkmale und Vorteile der Erfindung ergeben sich aus der folgenden Beschreibung eines zeichnerisch schematisch dargestellten Ausführungsbeispiels.

Es zeigen:
- Fig. 1: ein schematisches Blockschaltbild einer Schaltung zur Realisierung des erfindungsgemäßen Verfahrens;
- Fig. 2: eine Eichkurve, die den Zusammenhang zwischen Gesamtgewicht und Resonanzfrequenz darstellt.
- Fig. 3: zeigt eine Darstellung der Abhängigkeit von Gesamtgewicht und Resonanzfrequenz für einen Bereich, in dem die Gasflasche, deren Füllung zu bestimmen ist, fast leer ist.

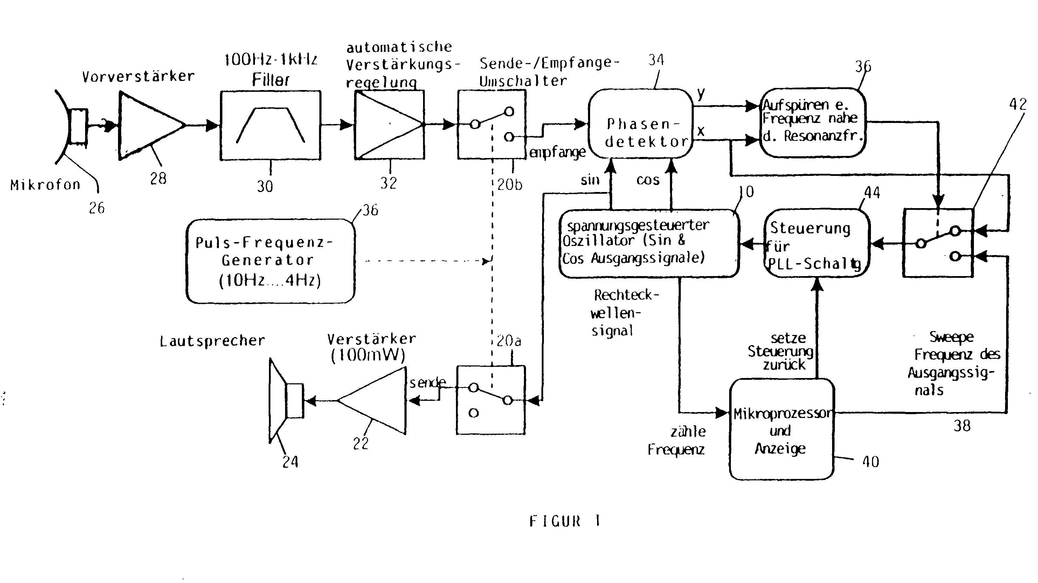

In Fig. 1 ist das Blockschaltbild einer Schaltung zur Realisierung des erfindungsgemäßen Verfahrens dargestellt. Hierin liefert ein spannungsgesteuerter Oszillator (VCO) Sinus- und Cosinus-Ausgangssignale. Bevorzugt wird ein spannungsgesteuerter Oszillator verwendet, dessen Ausgangsspannung sehr geringe harmonische Verzerrungen aufweist. Dadurch werden Resonanzen vermieden, die beispielsweise durch Differenzfrequenzen hoher harmonischer Anteile erzeugt würden. Eines der beiden Ausgangssignale wird über einen Sende-/Empfange-Umschalter, bestehend aus einem sendeseitigen Umschalter 20a und einem empfangsseitigen Umschalter 20b, über den sendeseitigen Umschalter 20a und einen Verstärker 22 mit einer Leistung von beispielsweise 100 mW an einen Lautsprecher 24 angelegt. Dieser Lautsprecher 24 liegt an der Gasflasche (nicht dargestellt), deren Füllstand bestimmt werden soll, an. Weiterhin liegt an dieser Gasflasche ein Mikrophon 26 an, dessen Signale über einen Vorverstärker 28 und einen Bandpaßfilter 30 einer Schaltung 32 zur automatischen Verstärkungsregelung (AGC) zugeführt werden. Das Bandpaßfilter 30 dient dazu, nicht erwünschte Resonanzen von Bauteilen an der Flasche, beispielsweise Handgriffen etc., sowie unerwünschtes Rauschen auszufiltern. Der Durchlaßbereich des Bandpaßfilters beträgt 50 Hz bis 5 kHz, vorzugsweise 100 Hz bis 1 kHz. Die AGC-Schaltung 32 dient dazu, das erfindungsgemäße Verfahren für unterschiedlichste Flaschen und unterschiedlichste Positionen der Anbringung von Lautsprecher und Mikrophon an der Flasche zu ermöglichen. Dadurch, daß das vom Mikrophon 26 gelieferte Signal immer automatisch auf einen bestimmten konstanten Pegel geregelt wird, wird ein an die nachfolgende Schaltung hinsichtlich des Pegels angepaßtes Mikrophonsignal für unterschiedlichste Flaschen und unterschiedlichste Positionen der Anbringung von Mikrophon und Lautsprecher erhalten. Im weiteren durchläuft das vom Mikrophon 26 gelieferte Signal den empfangsseitigen Teil 20b des Sende-/Empfange-Umschalters. Dieser Sende/Empfange-Umschalter 20a, 20b verhindert eine starke Rückkopplung zwischen Lautsprecher und Mikrophon. Diese Rückkopplung verhindert ein gutes Funktionieren des Phasendetektors 34, insbesondere, wenn die zu ermittelnden Resonanzen schwach sind. Der Sende-/Empfange-Umschalter 20a, 20b zeigt die Lösung dieses Problems: Das vom Mikrophon 26 gelieferte Signal wird nur zu den Zeiten im Phasendetektor 34 ausgewertet, zu denen die Signalzuführung zum Lautsprecher 24 durch den sendeseitigen Teil 20a des Sende-/Empfange-Umschalters unterbrochen worden ist. Das Äquivalent des bei Ein-Stellung des empfangsseitigen Teils 20b des Sende-/Empfange-Umschalters an den Lautsprecher 26 geführten Signals wird fortwährend dem Phasendetektor 34 zugeführt. Mit anderen Worten wird somit das Sendesignal gepulst, d.h. es wird gesendet, dann kurz gewartet und anschließend das vom Mikrophon an den Phasendetektor gelieferte Signal im Phasendetektor ausgewertet. Eine bevorzugte Betriebsart ist unter der Bezeichnung "switched PWM (Pulse Width Modulation)" bekannt. Der Sende-/Empfange-Umschalter 20a, 20b schaltet mit einer Frequenz von ca. 1 Hz bis 25 Hz, vorzugsweise 4 Hz bis 10 Hz, wobei dieses Umschaltsignal von einem Puls-Frequenz-Generator 36 geliefert wird. Durch die gepulste Betriebsweise wird auch verhindert, daß die Resonanz des Gerätes, in dem die zur Realisierung des erfindungsgemäßen Verfahrens dienende Schaltung untergebracht ist, die Füllstandsmessung beeinträchtigt, da diese Resonanz eine wesentlich kürzere Abklingzeit hat.

Im Phasendetektor 34 wird fortlaufend zu den beschriebenen Zeiten die Phasendifferenz zwischen dem vom Mikrophon 26 gelieferten Signal und dem vom spannungsgesteuerten Oszillator 10 gelieferten Signal bestimmt, wobei die Frequenz des vom spannungsgesteuerten Oszillator gelieferten Signals kontinuierlich verändert wird, d.h. von einem Maximalwert kontinuierlich einem Minimalwert zustrebt bzw. umgekehrt von einem Minimalwert zu einem Maximalwert verläuft. Diese Anweisung an den spannungsgesteuerten Oszillator 10 wird über den Pfad 38 von einem Mikroprozessor 40, der mit einer Anzeige verbunden ist, an den spannungsgesteuerten Oszillator 10 gegeben. Dieses kontinuierliche Durchwechseln der Frequenz ist auch unter dem Begriff Sweepen bekannt. Wird nun eine Phasendrehung festgestellt, bedeutet dies, daß eine Resonanzfrequenz gefunden wurde. Beim Aufspüren einer Frequenz nahe der Resonanzfrequenz wird der spannungsgesteuerte Oszillator 10 von einem Bauteil 36 von dem Befehl des Mikroprozessors 40, die Frequenz des Ausgangssignals zu sweepen, durch einen Schaltvorgang im Bauteil 42 abgekoppelt. Da die Schaltung derart abgestimmt ist, daß sie nur in einem sehr engen Frequenzband um die aktuelle Resonanzfrequenz empfindlich ist, wird das System beinahe unempfindlich für Geräusche im Hintergrund. Anstelle des Sweepens wird nunmehr eine Phase-Locked-Loop-Schaltung aktiviert. In ihr ist der Phasendetektor enthalten, wobei die Steuerung für die PLL-Schaltung im Block 44 realisiert ist. Durch die PLL-Schaltung werden die Phasen der beiden genannten Signale miteinander verglichen und die Frequenz wird exakt auf die Resonanzfrequenz hingeregelt. Im Ausführungsbeispiel enthält die Steuerung 44 für die PLL-Schaltung weiterhin einen PI-Regler (Proportional und Integral, nicht dargestellt), um den spannungsgesteuerten Oszillator derart zu steuern, daß er nach dem Passieren einer Resonanzfrequenz auf die exakte Resonanzfrequenz hin regelt und die PLL-Schaltung daraufhin geschlossen wird. Die Stabilität dieser Frequenz ist reproduzierbar besser als 0,1 Hz. Dieser PI-Regler wirkt insbesondere günstig mit der AGC-Schaltung 32 zusammen, da dadurch eine Stabilisierung der Amplitude des vom Mikrophon 26 gelieferten Signals erhalten wird. Damit ist auch der Anpreßdruck des Lautsprechers auf die Gasflasche weniger kritisch. Nach dem Schließen der PLL-Schaltung, d.h. der spannungsgesteuerte Oszillator 10 gibt ein Ausgangssignal mit der Resonanzfrequenz ab, hat ein weiteres Umgebungsgeräusch keinen Einfluß, d.h. die Auswertung kann ohne Störungen vollzogen werden.

Der spannungsgesteuerte Oszillator 10 gibt weiterhin ein Rechteckwellensignal an den Mikroprozessor 40 aus, das in seiner Frequenz dem an den Lautsprecher 24 gelieferten Signal entspricht. Diese Frequenz wird vom Mikroprozessor bestimmt und in einen Füllstand der Gasflasche umgerechnet und auf einer Anzeige angezeigt. Es kann auch vorgesehen werden, die Umrechnung und Anzeige permanent, d.h. bereits beim Sweepen der Frequenz des Ausgangssignals des spannungsgesteuerten Oszillators 10, mitlaufen zu lassen, wobei dann beim Schließen der PLL-Schaltung bereits der aktuelle Füllstand auf der Anzeige angezeigt wird. Die Umrechnung der ermittelten Resonanzfrequenz in den Füllstand der Gasflasche kann anhand einer im Mikroprozessor abgelegten Eichtabelle erfolgen, kann aber auch über einen formelmäßig ausgedrückten Zusammenhang zwischen Resonanzfrequenz und Füllstand mathematisch ermittelt werden.

Es kann weiterhin eine Temperaturmeßeinrichtung mit der in Fig. 1 dargestellten Schaltung verbunden werden, die die Temperatur der Mantelfläche der Gasflasche, deren Füllstand zu bestimmen ist, durch einen anliegenden Temperaturfühler (nicht dargestellt) abtastet. Die gemessene Temperatur ist dem Gasdruck im Inneren der Flasche proportional und die gemessene Resonanzfrequenz kann entsprechend dem ermittelten Gasdruck korrigiert werden.

Der Mikroprozessor 40 ist darüber hinaus mit der Steuerung für die PLL-Schaltung 44 verbunden, um für einen neuen Meßvorgang die Schließung der PLL-Schaltung aufzuheben, d.h. für die PLL-Schaltung die Steuerung zurückzusetzen.

Die nachfolgende Tabelle 1 zeigt den Zusammenhang zwischen Gesamtgewicht und Resonanzfrequenz für eine bestimmte Gasflasche, wobei zusätzlich die ermittelte Phase in Grad angegeben ist.

**Tabelle 1**

| Gesamtgewicht | Resonanzfrequenz | Phase (Grad) | |
|---|---|---|---|
| kg | Hz | | leer |
| 12,6 | 301 | 90 | |
| 12,92 | 279 | 90 | |
| 13 | 285,4 | 90 | |
| 14,24 | 298,1 | 90 | |
| 15,24 | 322 | 90 | |
| 15,8 | 340 | 90 | |
| 16,2 | 350 | 90 | |
| 17,52 | 404 | 90 | |
| 18,26 | 443,6 | 90 | |
| 19,28 | 469,4 | 90 | |
| 20,2 | 550 | 90 | |
| 22,04 | 671 | 90 | |
| 22,44 | 712 | 90 | |
| 23,52 | 732 | 0 | voll |

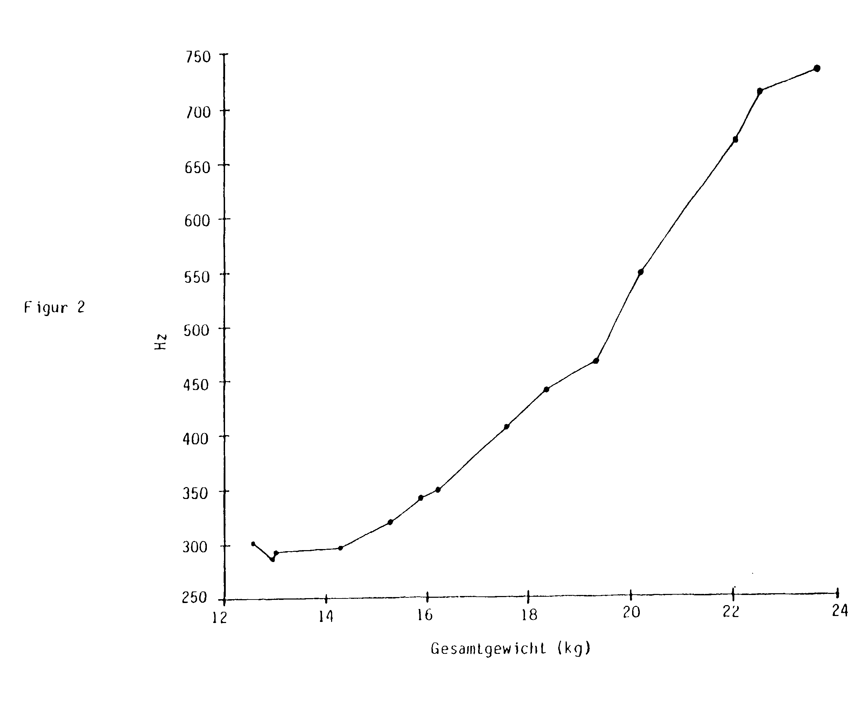

Dieser Zusammenhang ist in Fig. 2 graphisch dargestellt, wobei auf der Abszisse das Gesamtgewicht in kg aufgetragen ist und auf der Ordinate die Resonanzfrequenz in Hz. Für diese Darstellung, siehe Tabelle 1, hat die Gasflasche ein Leergewicht von 12,6 kg. Dieser Darstellung ist zu entnehmen, daß, mit Ausnahme des Anfangsbereichs, d.h. bei sehr geringen Füllständen, die Resonanzfrequenz mit zunehmendem Füllstand der Gasflasche zunimmt.

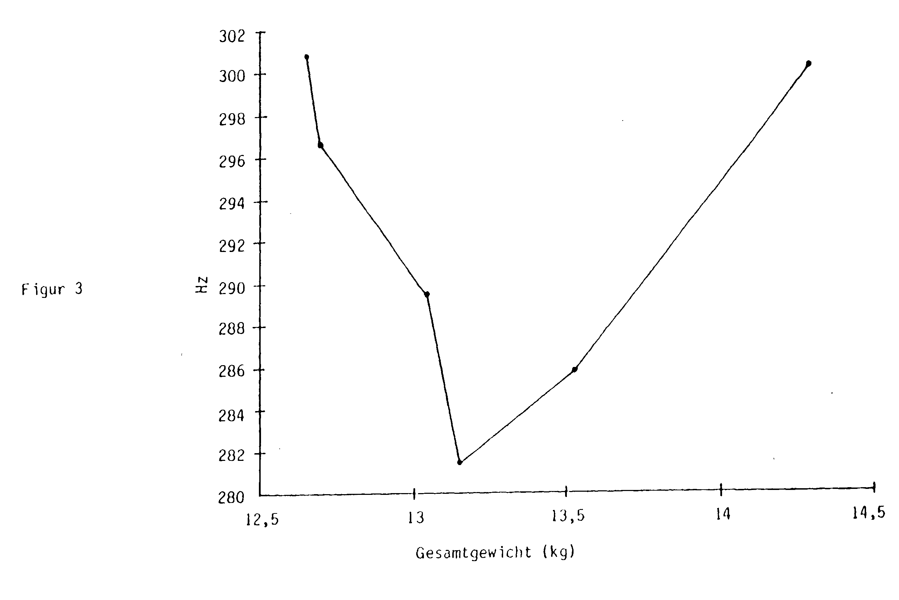

Fig. 3 zeigt den Bereich der Darstellung von Fig. 2, der sehr geringes Gesamtgewicht betrifft, in größerer Auflösung. Die entsprechenden Zahlenwerte sind in Tabelle 2 angegeben.

**Tabelle 2**

| Gesamtgewicht | Resonanzfrequenz |
|---|---|
| kg | Hz |
| 12,64 | 300,9 |
| 12,68 | 296,7 |
| 13,02 | 289,7 |
| 13,14 | 281,6 |
| 13,52 | 286,0 |
| 14,28 | 300,4 |

Die Schaltung zur Realisierung des erfindungsgemäßen Verfahrens kann in einem tragbaren Gerät, bevorzugt mit Batteriespeisung, umgesetzt werden.

Hinsichtlich der Realisierung kommen im wesentlichen zwei Varianten in Betracht: Bei einer ersten Variante sind der Oszillator 10 sowie der Phasendetektor 34 für analogen Betrieb ausgelegt. Bei der zweiten Variante arbeiten nur noch der Mikrophonvorverstärker 28 sowie der Lautsprecherverstärker 22 analog, während alle restlichen Bauteile digital arbeiten. Bei einer derartig umfassenden digitalen Realisierung ist insbesondere vorteilhaft, daß keine Signale von irgendwelchen Funktionsgruppen, außer dem Mikroprozessor, zurückgekoppelt werden. Der komplette Meßvorgang, ausgehend vom Generieren der Ansteuersignale bis zum Phasenvergleich, findet alles im selben Prozessor statt. Dies erlaubt eine einfachere Feststellung von fehlerhaften Platinen und eine Reduktion der Anzahl der Komponenten. Weiterhin genügt es, um die Eigenschaften eines Meßvorgangs zu ändern, zum Beispiel die Geschwindigkeit eines Sweep-Durchlaufs, allein die Software zu ändern. Dies ist auf einfache Weise möglich. Da auch der Frequenzbereich softwaremäßig bestimmt ist, können andere Flaschen und andere Arten von Gasen mit der gleichen Hardware gemessen werden, indem lediglich die entsprechenden Parameter softwaremäßig geändert werden.

Bei der digitalen Realisierung wird das von der Flasche zurückkommende Mikrophonsignal mittels eines nicht dargestellten Analog-Digital-Konverters für das Einlesen in den Mikroprozessor konvertiert. Es kann auch ein digitaler Filter verwendet werden, um die Umgebungsgeräusche auszufiltern.

## Patentansprüche

1. Verfahren zur Bestimmung des Inhalts einer Gasflasche, insbesondere einer Flüssiggasflasche, folgende Schritte umfassend:
a) Anregen der Gasflasche durch Anlegen eines Signals an einen Lautsprecher, der an der Gasflasche angebracht ist;
b) Vergleich der Phase des zur Anregung verwendeten Signals mit einem von einem an der Gasflasche angebrachten Mikrophon gelieferten Signal, wobei das vom Mikrophon gelieferte Signal zu Zeiten ausgewertet wird, zu denen der Lautsprecher kein Signal abgibt, wobei das zweite für den Phasenvergleich nötige Signal ein mit dem den Lautsprecher ansteuernden Signal phasengleiches Signal ist;
c) kontinuierliches Ändern der Frequenz des zur Anregung verwendeten Signals, bis eine Resonanzfrequenz festgestellt wird;
d) Umsetzen der Resonanzfrequenz in einen Füllstand der Gasflasche.

2. Verfahren nach Anspruch 1,
**dadurch gekennzeichnet,**
**daß** das zur Anregung verwendete Signal von einem spannungsgesteuerten Oszillator erzeugt wird.

3. Verfahren nach Anspruch 2,
**dadurch gekennzeichnet, daß** der spannungsgesteuerte Oszillator von einem Mikroprozessor gesteuert wird.

4. Verfahren nach einem der vorhergehenden Ansprüche,
**dadurch gekennzeichnet,**
**daß** die Resonanzfrequenz aufgrund eines Phasenvergleichs der Phase des zur Anregung verwendeten Signals mit der Phase des vom Mikrophon gelieferten Signals festgestellt wird.

5. Verfahren nach einem der vorhergehenden Ansprüche,
**dadurch gekennzeichnet,**
**daß** die kontinuierliche Änderung der Frequenz des den Lautsprecher ansteuemden Signals durch Sweepen der Frequenz von einem Maximalwert zu einem Minimalwert oder von einem Minimalwert zu einem Maximalwert erfolgt.

6. Verfahren nach einem der vorhergehenden Ansprüche,
**dadurch gekennzeichnet,**
**daß** bei Feststellen einer Resonanzfrequenz eine Phase-Locked-Loop-Schaltung aktiviert wird.

7. Verfahren nach Anspruch 6,
**dadurch gekennzeichnet,**
**daß** vor Aktivierung der Phase-Locked-Loop-Schaltung die exakte Resonanzfrequenz durch Steuerung des spannungsgesteuerten Oszillators mit Hilfe eines PI-Verstärkers eingestellt wird.

8. Verfahren nach einem der vorhergehenden Ansprüche,
**dadurch gekennzeichnet,**
**daß** das vom Mikrophon gelieferte Signal bandpaßgefiltert wird.

9. Verfahren nach einem der vorhergehenden Ansprüche,
**dadurch gekennzeichnet,**
**daß** das vom Mikrophon gelieferte Signal auf konstanten Pegel geregelt wird.

10. Verfahren nach einem der vorhergehenden Ansprüche,
**dadurch gekennzeichnet,**
**daß** die Frequenz beim kontinuierlichen Ändern einen Frequenzbereich zwischen 250 Hz und 2,5 kHz durchläuft.

11. Verfahren nach einem der vorhergehenden Ansprüche,
**dadurch gekennzeichnet,**
**daß** das den Lautsprecher ansteuernde Signal ein gepulstes Signal ist und die Auswertung des vom Mikrophon gelieferten Signals in den Pulspausen stattfindet.

12. Verfahren nach Anspruch 11,
**dadurch gekennzeichnet,**
**daß** die Pulsfrequenz zwischen 4 Hz und 10 Hz beträgt.

13. Verfahren nach einem der vorhergehenden Ansprüche,
**dadurch gekennzeichnet,**
**daß** zusätzlich die Temperatur der Gasflasche bestimmt wird und bei der Umsetzung der Resonanzfrequenz in den Füllstand berücksichtigt wird.

14. Verfahren nach einem der vorhergehenden Ansprüche,
**dadurch gekennzeichnet,**
**daß** das den Lautsprecher ansteuernde Signal auf konstante Amplitude geregelt wird.

15. Verfahren nach einem der vorhergehenden Ansprüche,
**dadurch gekennzeichnet,**
**daß** nach der Umsetzung der Füllstand der Flasche automatisch auf einer Anzeige angezeigt wird.

16. Verfahren nach einem der vorhergehenden Ansprüche,
**dadurch gekennzeichnet,**
**daß** die Umsetzung der Resonanzfrequenz in den Füllstand der Gasflasche durch Nachschlagen in einer im Mikroprozessor abgelegten Eichtabelle oder unter Auswertung eines vorher ermittelten mathematischen Zusammenhangs dieser Größen vollzogen wird.

17. Vorrichtung zur Bestimmung des Inhalts einer Gasflasche, insbesondere einer Flüssiggasflasche, umfassend:
a) einen Lautsprecher (24), dem ein Signal zum Anregen der Gasflasche zuführbar ist und der derart ausgebildet ist, daß er an eine Gasflasche angelegt werden kann;
b) ein Mikrophon (26), das derart ausgebildet ist, daß es an eine Gasflasche angelegt werden kann;
c) einen Phasendetektor (34) zum Vergleichen der Phase eines mit dem zur Anregung verwendeten Signal phasengleichen Signals mit einem von dem Mikrophon (26) gelieferten Signal;
d) einem Oszillator (10), der das zur Anregung verwendete Signal und das mit dem zur Anregung verwendeten Signal phasengleiche Signal bereitstellt, wobei die Frequenz dieser Signale kontinuierlich änderbar ist;
e) einen Umschalter (20a, 20b), der derart ausgebildet ist, daß er eine Auswertung des vom Mikrophon (26) gelieferten Signals durch den Phasendetektor (34) nur dann ermöglicht, wenn der Lautsprecher (24) kein Signal abgibt, wobei das zweite für den Phasenvergleich nötige Signal das vom Oszillator bereitgestellte, mit dem zur Anregung verwendeten Signal phasengleiche Signal ist;
f) Mittel (40) zum Umsetzen einer bestimmten Frequenz in einen Füllstand der Gasflasche.

## Claims

1. Method for determining the content of a gas bottle, especially a liquid gas bottle, comprising the steps of:
a) exciting the gas bottle by applying a signal to a speaker attached to the gas bottle;
b) comparing the phase of the signal used for excitation with a signal supplied by a microphone attached to the gas bottle, wherein the signal supplied by the microphone is evaluated at times at which the speaker does not output any signal, wherein the second signal required for the phase comparison is a signal in phase with the signal driving the speaker;
c) continuously changing the frequency of the signal used for excitation until a resonant frequency is detected;
d) converting the resonant frequency to a filling level of the gas bottle.

2. Method according to claim 1,
**characterized in that**
the signal used for excitation is generated by a voltage-controlled oscillator.

3. Method according to claim 2,
**characterized in that**
the voltage-controlled oscillator is controlled by a microprocessor.

4. Method according to any of the preceding claims,
**characterized in that**
the resonant frequency is detected due to a phase comparison of the phase of the signal used for excitation with the phase of the signal supplied by the microphone.

5. Method according to any of the preceding claims,
**characterized in that**
the continuous change of the frequency of the signal driving the speaker is effected by sweeping the frequency from a maximum value to a minimum value or from a minimum value to a maximum value.

6. Method according to any of the preceding claims,
**characterized in that**
a phase locked loop circuit is activated upon detecting a resonant frequency.

7. Method according to claim 6,
**characterized in that**
before activation of the phase locked loop circuit, the exact resonant frequency is adjusted by controlling the voltage-controlled oscillator by means of a PI amplifier.

8. Method according to any of the preceding claims,
**characterized in that**
the signal supplied by the microphone is band pass filtered.

9. Method according to any of the preceding claims,
**characterized in that**
the signal supplied by the microphone is controlled to a constant level.

10. Method according to any of the preceding claims,
**characterized in that**
in continuously changing, the frequency sweeps a frequency range between 250 Hz and 2.5 kHz.

11. Method according to any of the preceding claims,
**characterized in that**
the signal driving the speaker is a pulsed signal and the evaluation of the signal supplied by the microphone is effected within the pulse breaks.

12. Method according to claim 11,
**characterized in that**
the pulse frequency is between 4 Hz and 10 Hz.

13. Method according to any of the preceding claims,
**characterized in that**
in addition, the temperature of the gas bottle is determined and is taken into account in converting the resonant frequency to the filling level.

14. Method according to any of the preceding claims,
**characterized in that**
the signal driving the speaker is controlled to a constant amplitude.

15. Method according to any of the preceding claims,
**characterized in that**
after conversion, the filling level of the bottle is automatically displayed on a display.

16. Method according to any of the preceding claims,
**characterized in that**
the conversion of the resonant frequency to the filling level of the gas bottle is effected by look-up in a calibration table stored in the microprocessor, or by evaluation of a previously determined mathematical relation of these quantities.

17. Apparatus for determining the content of a gas bottle, especially a liquid gas bottle, comprising:
a) a speaker (24) providable with a signal for exciting the gas bottle, and being formed such that it can be applied to a gas bottle;
b) a microphone (26) being formed such that it can be applied to a gas bottle;
c) a phase detector (34) for comparing the phase of a signal in phase with the signal used for excitation with a signal supplied by the microphone (26);
d) an oscillator (10) providing the signal used for excitation and the signal in phase with the signal used for excitation, wherein the frequency of these signals is continuously changeable;
e) a switch (20a, 20b) being formed such that it only allows evaluation of the signal supplied by the microphone (26) by the phase detector (34), if the speaker (24) does not output any signal, wherein the second signal required for the phase comparison is the signal in phase with the signal used for excitation, which is provided by the oscillator;
f) means (40) for converting a certain frequency to a filling level of the gas bottle.

## Revendications

1. Procédé pour la détermination du contenu d'une bouteille de gaz, en particulier de gaz liquide, comprenant les étapes suivantes :
a) excitation de la bouteille de gaz par l'application d'un signal sur un haut-parleur monté sur la bouteille da gaz ;
b) comparaison entre la phase du signal utilisé pour l'excitation et un signal délivré par un microphone monté sur la bouteille de gaz, le signal délivré par le microphone étant évalué à des temps spécifiques, pendant lesquels le haut-parleur n'émet aucun signal, le deuxième signal nécessaire pour la comparaison des phases étant un signal équiphase au signal excitant le haut-parleur ;
c) variation continuelle de la fréquence du signal utilisé pour l'excitation jusqu'à ce qu'une fréquence de résonance soit constatée ;
d) conversion de la fréquence de résonance en niveau de remplissage de la bouteille de gaz.

2. Procédé selon la revendication 1,
**caractérisé en ce que**
le signal utilisé pour l'excitation est généré par un oscillateur commandé en tension.

3. Procédé selon la revendication 2,
**caractérisé en ce que**
l'oscillateur commandé en tension est commandé par un microprocesseur.

4. Procédé selon l'une quelconque des revendications précédentes,
**caractérisé en ce que**
la fréquence de résonance est constatée au moyen d'une comparaison de phases entre la phase du signal utilisé pour l'excitation et la phase délivré par le microphone.

5. Procédé selon l'une quelconque des revendications précédentes,
**caractérisé en ce que**
la variation continuelle de la fréquence du signal excitant le haut-parleur par la wobbulation de la fréquence d'une valeur maximale à une valeur minimale ou d'une valeur minimale à une valeur maximale.

6. Procédé selon l'une quelconque des revendications précédentes,
**caractérisé en ce que**
lors d'une constatation d'une fréquence de résonance, un circuit de réglage de phase est activé.

7. Procédé selon la revendication 6,
**caractérisé en ce que**
la fréquence de résonance exacte est réglée en commandant l'oscillateur commandé en tension à l'aide d'un amplificateur proportionnel et intégral avant l'activation du circuit de réglage de phase.

8. Procédé selon l'une quelconque des revendications précédentes,
**caractérisé en ce que**
le signal délivré par le microphone est passe-bandé.

9. Procédé selon l'une quelconque des revendications précédentes,
**caractérisé en ce que**
le signal délivré par le microphone est réglé à un niveau constant.

10. Procédé selon l'une quelconque des revendications précédentes,
**caractérisé en ce que**
la fréquence, lors de la variation continuelle, passe par une gamme de fréquences comprise entre 250 Hz et 2,5 kHz.

11. Procédé selon l'une quelconque des revendications précédentes,
**caractérisé en ce que**
le signal excitant le haut-parleur est un signal pulsé et que l'évaluation du signal délivré par le microphone a lieu dans les intervalles entre les impulsions.

12. Procédé selon la revendication 11,
**caractérisé en ce que**
la fréquence de répétition des impulsions est comprise entre 4 Hz et 10 Hz.

13. Procédé selon l'une quelconque des revendications précédentes,
**caractérisé en ce que**
en ajout, la température de la bouteille de gaz est déterminée et prise en considération lors de la conversion de la fréquence de résonance en niveau de remplissage.

14. Procédé selon l'une quelconque des revendications précédentes,
**caractérisé en ce que**
le signal excitant le haut-parleur est réglé à une amplitude constante.

15. Procédé selon l'une quelconque des revendications précédentes,
**caractérisé en ce que**
le niveau de remplissage de la bouteille est automatiquement indiqué sur un visuel.

16. Procédé selon l'une quelconque des revendications précédentes,
**caractérisé en ce que**
la conversion de la fréquence de résonance en niveau de remplissage de la bouteille de gaz est mise en oeuvre par la consultation d'une table d'étalonnage déposée dans le microprocesseur, ou par l'évaluation d'une corrélation mathématique de ces quantités déterminée au préalable.

17. Dispositif pour la détermination du contenu d'une bouteille de gaz, en particulier d'un bouteille de gaz liquide, comprenant :
a) un haut-parleur (24) auquel peut être amené un signal pour exciter la bouteille de gaz et qui est configuré de manière à ce qu'il puisse être appliqué sur une bouteille de gaz ;
b) un microphone (26) qui est configuré de manière à ce qu'il puisse être appliqué sur une bouteille de gaz ;
c) un détecteur de phases (34) pour comparer la phase d'un signal équiphase au signal utilisé pour l'excitation avec un signal délivré par le microphone (26);
d) un oscillateur (10) mettant à la disposition le signal utilisé pour l'excitation et le signal équiphase au signal utilisé pour l'excitation, la fréquence de ces signaux étant continuellement variable ;
e) un commutateur (20a, 20b) qui est configuré de manière à ce qu'il ne rende possible une évaluation du signal délivré du microphone (34) par le détecteur de phases (34) que lorsque le haut-parleur (24) n'émet aucun signal, le deuxième signal nécessaire pour la comparaison de phases étant le signal mis à la disposition par l'oscillateur et équiphase au signal utilisé pour l'excitation ;
f) des moyens (40) pour convertir une fréquence déterminée en niveau de remplissage de la bouteille de gaz.
